# EUROPÄISCHE PATENTANMELDUNG

(11) **EP 0 664 630 A2**
(43) Veröffentlichungstag der Anmeldung: **26.07.1995**
(21) Anmeldenummer: 94120227.7
(22) Anmeldetag: 20.12.1994
(51) Int. Cl.: H04L 12/64, H04Q 11/04

(54) **Verfahren zum Übertragen von Digitalsignalen in einem ATM-Kommunikationsnetz**

(30) Priorität: 21.12.1993 DE 4343720
(71) Anmelder: SIEMENS AKTIENGESELLSCHAFT, D-80333 München (DE)
(72) Erfinder: Fundneider, Oswald, Dipl.-Ing., D-82057 Icking / Isartal (DE); Lutz, Karl Anton, Dipl.-Ing., D-81479 München (DE); Löbig, Norbert, Dr., D-64241 Darmstadt (DE)

(57) **Zusammenfassung**

Um den Informationsteil einer ATM-Zelle mit 48 Oktetts eines 64 kBit/s Kanals zu füllen, benötigt man eine Paketierzeit von 6 ms. Für PCM-Sprachverbindungen ist diese Laufzeit unzulässig groß. Das erfindungsgemäße Verfahren schafft hier Abhilfe, indem der Informationsteil der ATM-Zellen in 24 Felder zu je 2 Oktetts unterteilt wird. Dort werden dann je zwei Datenoktetts eines Kanals eingetragen.

## Beschreibung

Die Erfindung betrifft ein Verfahren gemäß dem Oberbegriff des Patentanspruchs 1.

In Übertragungssystemen, die nach einem asynchronen Transfermodus (ATM-Modus) betrieben werden, werden die zu übertragenden Nachrichten in Nachrichtenzellen fester Länge übertragen. Dabei weisen die Nachrichtenzellen jeweils einen Informationsteil sowie einen Kopfteil auf. Der Informationsteil dient zur Aufnahme der Nachrichten, während der dem Informationsteil vorangestellte Kopfteil Informationen über die Zuordnung einer Nachrichtenzelle zu einer virtuellen Verbindung trägt. Üblicherweise weist der Kopfteil eine Länge von 5 Oktetts und der Informationsteil eine Länge von 48 Oktetts auf.

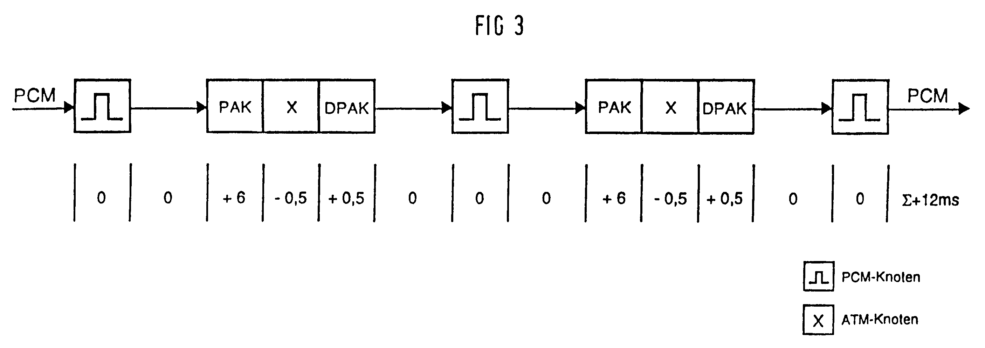

Generell wird angestrebt, das universelle Kommunikationsnetz für Sprache, Text, Daten und Bild (ISDN) auf Basis des asynchronen Transfermodus in öffentlichen und privaten Netzen zu realisieren. Dabei entsteht jedoch das Problem, daß beispielsweise die in der bisherigen Übertragungstechnik (Puls-Code-Modulationstechnik PCM) übertragenen Sprachinformationen in Nachrichtenzellen umgesetzt werden müssen und umgekehrt. Eine derartige Umsetzung muß - je nach Konfiguration und Einbindung des ATM-Kommunikationsnetzes - unter Umständen mehrfach durchgeführt werden. In Figur 3 ist beispielsweise eine derartige Konfiguration aufgezeigt. Darin ist noch kein einheitliches ATM-Übertragungsnetz vorhanden, sondern mehrere sogenannte ATM-Inseln, die im PCM-Übertragungsnetz eingebunden sind. Diese dürften dann im Zuge von Erweiterungsmaßnahmen zu einem späteren Zeitpunkt zu einem gesamten ATM-Kommunikationsnetz zusammenwachsen. Für die Einführungsphase bedeutet dies jedoch, daß zwischen einem rufenden A-Teilnehmer und gerufenen B-Teilnehmer unter Umständen eine Mehrzahl von derartigen ATM-Inseln geschaltet sind. Insofern ist also ein mehrfaches Umsetzen der PCM-Sprachinformationen in ATM-Nachrichtenzellen und umgekehrt vonnöten.

Das Umsetzen der Sprachinformationen in Nachrichtenzellen wird an den Schnittstellen des PCM-Übertragungsnetzes mit dem ATM-Kommunikationsnetz durchgeführt. Als Schnittstellen-Einrichtungen werden dabei Paketier-/Depaketiereinrichtungen verwendet. Die Aufgabe der ersteren besteht darin, die nach dem PCM-Übertragungsprinzip übertragenen Sprachinformationen in den Informationsteil der Nachrichtenzellen einzubinden. Die Aufgabe der letzteren besteht darin, die im Informationsteil der Nachrichtenzellen eingebundenen Sprachinformationen wieder dem PCM-Übertragungsnetz zugänglich zu machen. Würde ein rufender A-Teilnehmer über eine derartige Konfiguration mit einem B-Teilnehmer Sprachinformationen austauschen, so würden bei einer relativ kurzen Ortsverbindung keinerlei Nachteile die Qualität der Verbindung beeinträchtigen. Dies ändert sich jedoch schlagartig mit der Länge der betreffenden Verbindung, da mehrere Paketier-/Depaketiervorgänge immer größere Verzögerungszeiten nach sich ziehen, die in der Praxis nicht toleriert werden können. Aufgrund derartiger Laufzeiten entstehen im Netz unvermeidliche Echolaufzeiten, die sich während des Telefonbetriebs als störend erweisen. Aus diesem Grund werden derartige technische Probleme in der CCITT-Empfehlung G131, Blaubuch angesprochen. Dort wird empfohlen, ab einer einfachen Signallaufzeit von 25 ms sogenannte Echounterdrückungsmaßnahmen zu verwenden. Derartige Maßnahmen können beispielsweise die Verwendung von Echosperren bzw. Echocanceller sein. Die Verwendung von Echounterdrückungssystemen kann aber in der Praxis keine wirtschaftliche Lösung mehr darstellen. Insofern ist bei der Einbindung von ATM-Inseln in ein bestehendes PCM-Übertragungsnetz immer das Bestreben der Fachwelt darauf gerichtet, Sprachinformationen in möglichst wirtschaftlicher Weise in Nachrichtenzellen einzubinden, die dann nach dem ATM-Übertragungsprinzip über ein ATM-Kommunikationsnetz durchgeschaltet werden. Dabei wird gleichzeitig die Verwendung von Echosperren bzw. Echocancellern zur Erlangung einer möglichst wirtschaftlichen Ausgestaltung vermieden.

Aus der deutschen Offenlegungsschrift DE 42 18 053 A1 ist ein derartiges Verfahren bekannt. Dabei wird von einer Übertragungsrate der Sprachinformation im PCM-Übertragungsnetz von 64 kBit/s ausgegangen. Bei der Verwendung von PCM30-Systemen werden die Sprachinformationen in 30 Kanälen untergebracht,die zusammen mit zwei weiteren, der Synchronisierung und der Signalisierung dienenden Kanälen einen PCM-Rahmen bilden. Die aufeinanderfolgenden PCM-Rahmen werden weiterhin als ein PCM-System definiert, wobei in der Praxis eine Vielzahl derartiger PCM-Systeme verwendet wird. Die Dauer eines PCM-Rahmens beträgt 125 µs. Der Informationsteil einer Nachrichtenzelle wird dann mit Sprachinformationen aus einem PCM30-Rahmen gefüllt. Dabei wird der komplette PCM30-Rahmen in den Informationsteil einer Nachrichtenzelle eingefügt. Die Breite eines PCM30-Kanals beträgt 8 Bit. Die Breite eines Oktetts des Informationsteils einer Nachrichtenzelle weist ebenfalls 8 Bit auf. Dies bedeutet also, daß das Einfügen eines kompletten PCM30-Rahmens in den Informationsteil der Nachrichtenzelle 32 Oktetts benötigt. Da der Informationsteil insgesamt 48 Oktetts mit einer Breite von 8 Bit aufweist, bleiben bei dem dort vorgeschlagenen Verfahren insgesamt 16 Oktetts frei. Dies bedeutet letztendlich, daß die Nachrichtenzelle nur zu einem Teil gefüllt ist. Eine derartige Maßnahme würde zwar die sonst verwendete Paketierzeit in erheblichem Maße verkürzen, das Übertragen von teilgefüllten Zellen bedeutet jedoch in der Praxis, daß dieselben entsprechend öfters auszusenden sind. Dies wiederum zieht für die Verkehrslast des gesamten ATM-Kommunikationsnetzes nicht zu tolerierende Nachteile mit sich.

Der Erfindung liegt die Aufgabe zugrunde, ein Verfahren anzugeben, mittels dem die Paketier-/Depaketiervorgänge verkürzt werden können.

Die Erfindung wird, ausgehend von dem Oberbegriff des Patentanspruchs 1, durch dessen kennzeichnende Merkmale gelöst.

Vorteilhaft an der Erfindung ist das Zusammenfassen von Übertragungskanälen zu einer Übertragungskanal-Gruppe. Dabei wird die Anzahl der zu der jeweiligen Übertragungskanal-Gruppe gehörenden Übertragungskanäle derart festgelegt, daß jedem dieser Übertragungskanäle in den Informationsteilen aufeinanderfolgender Nachrichten-Zellen jeweils wenigstens zwei Felder zugeordnet werden. Die aufeinanderfolgenden Nachrichten-Zellen werden dann innerhalb des ATM-Kommunikationsnetzes übertragen und nach Maßgabe der Zuordnung der Felder der Informationsteile dieser Nachrichten-Zellen zu den Übertragungskanälen der jeweiligen Übertragungskanal-Gruppe wieder aufgelöst.

Gemäß Anspruch 2 ist vorgesehen, daß die Übertragungskanäle PCM-Kanäle für die Übertragung von PCM-codierten Sprachsignalen sind. Damit ist der Vorteil verbunden, daß Sprachsignale für die Übertragung und Durchschaltung in einem ATM-Kommunikationsnetz paketiert werden können. Bei Verlassen des ATM-Kommunikationsnetzes werden die entsprechenden PCM-Informationen wieder depaketiert und in PCM-Kanäle eingefügt.

Gemäß Anspruch 3 ist vorgesehen, daß an ein Koppelfeld der wenigstens einen ATM-Kommunikationseinrichtung wenigstens ein Serversystem angeschlossen ist. Darin wird der Kopfteil der ankommenden paketierten Nachrichtenzellen entnommen und ausgewertet und nach Maßgabe der darin enthaltenen Informationen dieselben zu den entsprechenden Depaketiereinrichtungen weitergeleitet. Damit ist insbesondere der Vorteil verbunden, daß die jeweiligen Nachrichten-Zellen nach Maßgabe der im Kopfteil enthaltenen Information zu den richtigen Depaketiereinrichtungen weitergeleitet werden.

Gemäß Anspruch 4 ist vorgesehen, daß anstelle der im Informationsteil einer Nachrichten-Zelle fest definierten Vielzahl von Feldern eine variable Vielzahl verwendet wird. Damit ist der Vorteil einer schnelleren Paketierung/Depaketierung verbunden.

Gemäß Anspruch 5 ist vorgesehen, daß n x 64 kBit/s-Übertragungskanäle nach dem Verfahren der Ansprüche 1 bis 4 in Übertragungskanal-Gruppen zusammengefaßt und wieder aufgelöst werden.

Gemäß Anspruch 6 ist eine Anordnung zur Durchführung des Verfahrens vorgesehen. Dabei sind an die wenigstens eine ATM-Kommunikationseinrichtung Paketiereinrichtungen bzw. Depaketiereinrichtungen angeschlossen. Erstere tragen insbesondere dafür Sorge, daß die Übertragungskanäle zu wenigstens einer Übertragugnskanal-Gruppe zusammengefaßt werden, während letztere die paketierten Übertragungskanäle wieder in die zugeordneten Übertragungskanal-Gruppen auflösen.

Im folgenden wird die Erfindung anhand eines Ausführungsbeispiels näher erläutert.

Es zeigen:
- Figur 1: eine ATM-Insel im Sprachnetz,
- Figur 2: ein Laufzeitdiagramm für Nachrichtenzellen,
- Figur 3: einen Laufzeitvergleich zwischen einem PCM-Netz mit und ohne ATM-Knoten
- Figur 4: einen Laufzeitvergleich zwischen einem PCM-Netz und einem ATM-Overlay-Netz.
- Figur 5: die interne Zellstruktur.

Die für die Spracheinführung im ATM-Kommunikationsnetz einfachste Vorstellung geht davon aus, daß bereits ein ATM-Overlay-Netz für Breitbanddienste existiert. Dieses überdeckt dann das gesamte nationale bzw. internationale Transitnetz.

Für die Einbindung von Sprachkanälen in den Informationsteil INFO einer Nachrichtenzelle Z wird die Gesamtlaufzeit in einer Richtung um erwähnte 8 ms erhöht. Gleichzeitig verringert sich jedoch die einfache Laufzeit pro Knoten im Mittel um etwa 0,5 ms. Dies hat seinen Grund darin, daß ATM-Kommunikationsnetze eine kürzere Laufzeit aufweisen als konventionelle PCM-Vermittlungen. In Figur 3 sind die entsprechenden Verhältnisse nochmals aufgezeigt.Hier ist als Beispiel eine Verbindung über fünf ATM-Knoten mit Paketier-/Depaketiervorgängen an dem Ende der jeweiligen Verbindung aufgezeigt. Die Laufzeiten der Verbindungsleitungen werden als gleich zu den Laufzeiten im PCM-Übertragungsnetz angenommen und erscheinen daher als '0' in der Gesamtbilanz. Die Laufzeit der Nachrichten-Zellen Z in den ATM-Knoten ist kürzer als die Signallaufzeit in den PCM-Vermittlungen und erscheint daher in der Gesamtbilanz als negativer Wert. Eine vollständige Kompensation der Paketier-/Depaketierzeiten ist in den realen Kommunikationsnetzen nur schwer zu erreichen. Somit muß die zusätzliche Signallaufzeit - in vorliegendem Ausführungsbeispiel 5,5 ms - in Kauf genommen werden. Wesentlich ist allerdings, daß diese zusätzliche Verzögerungszeit nur einmal und nicht mehrmals - wie dies bei internationalen Verbindungen möglich ist - auftritt. Lediglich dort, wo ohnehin schon Maßnahmen zur Echounterdrückung vorgesehen sind, können mehrfache Paketier-/Depaketiervorgänge toleriert werden.

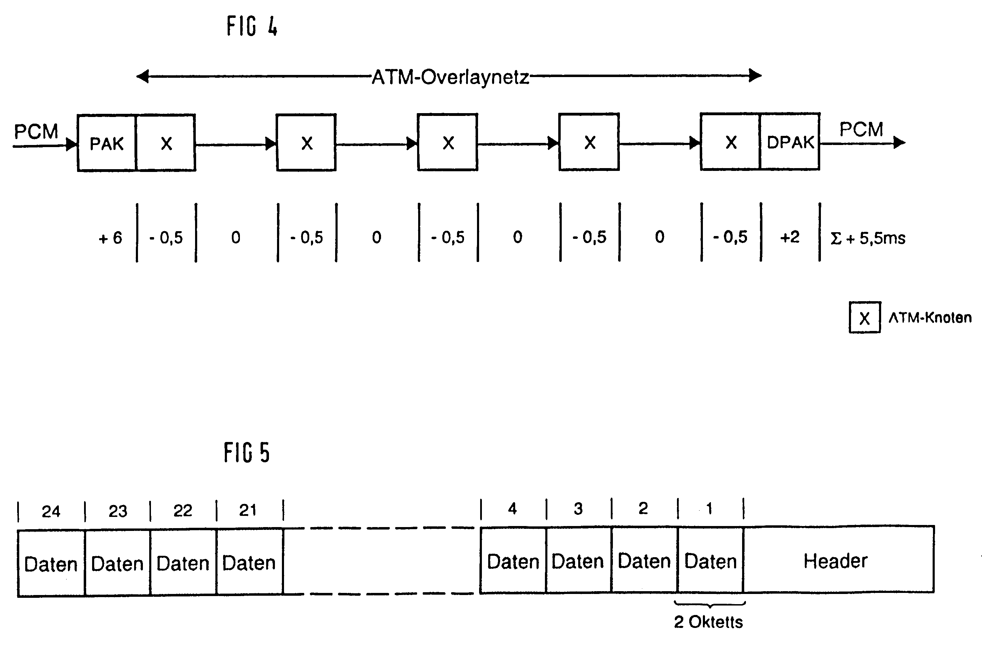

In Figur 4 ist eine Sprachverbindung über insgesamt fünf Knoten aufgezeigt. Zwei dieser fünf Knoten sollen als ATM-Knoten ausgestaltet sein. Für das Depaketieren in einer ATM-Insel genügen in etwa 0,5 ms für die Kompensation von Laufzeitänderungen im Vergleich zu den für netzweite Kompensation angegebenen 2 ms. Als Ergebnis des Laufzeitvergleichs mit einem konventionellen PCM-Kommunikationsnetz ergibt sich hier eine Erhöhung der einfach gerichteten Verzögerungszeiten um 12 ms. Pro zu durchlaufender ATM-Insel muß somit mit einer zusätzlichen Laufzeit von 6 ms gerechnet werden. Um keine Qualitätsverschlechterungen gegenüber konventionellen PCM-Vermittlungen zu bekommen, müssen sich diese ATM-Inseln in ihrem Laufzeitverhalten wie PCM-Vermittlungen benehmen. Dies bedeutet, daß als 95%-Wert für den 'Round-Trip-Delay' 1500 µs zugelassen werden (siehe CCITT, Blaubuch Q.5.551).

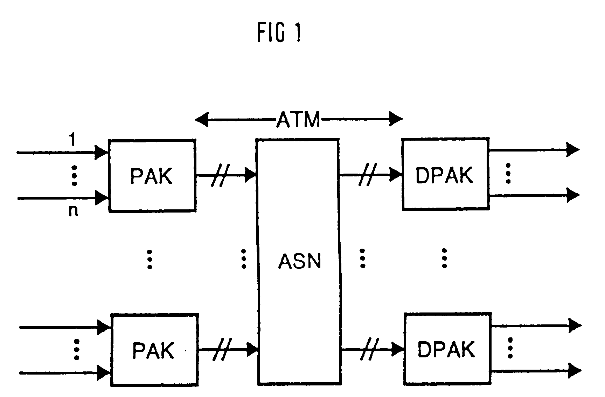

In Figur 1 ist eine erfindungsgemäße Anordnung aufgezeigt. Darin kommt das erfindungsgemäße Verfahren zum Ablauf. Eingangsseitig sind Paketiereinrichtungen PAK aufgezeigt, die das Einfügen der PCM-Sprachkanäle in die entsprechenden Informationsteile INFO der zu übertragenden Nachrichten-Zellen Z durchführen. Diese Paketiereinrichtungen PAK sind an ein ATM-Koppelfeld ASN angeschlossen. Weiterhin sind an dasselbe die Depaketiereinrichtungen DPAK angeschlossen. Hier wird der eingangs durchgeführte Paketiervorgang wieder rückgängig gemacht.

Im folgenden wird davon ausgegangen, daß die einzelnen 64 kbit/s-Kanäle von PCM 30 Systemen in die Informationsteile INFO der Nachrichtenzellen Z paketiert werden sollen. Für andere Multiplexsysteme gilt entsprechendes. Weiterhin wird davon ausgegangen, daß die Paketierung von Sprachsignalen durchgeführt wird, dabei ist allerdings zu berücksichtigen, daß auch andere Nachrichtensignale verschiedener Multiplexsysteme in die Informationsteile von Nachrichtenzellen Z nach dem erfindungsgemäßen Prinzip einfügbar sind. Das Lösungsprinzip sieht vor, in den Paketiereinrichtungen PAK den Informationsteil der Nachrichtenzellen Z in vierundzwanzig Felder zu je zwei Oktetts zu unterteilen. Dort werden dann je zwei Datenoktetts eines Übertragungskanals eingetragen. Von den Paketiereinrichtungen PAK werden die Nachrichtenzellen Z zu den Depaketiereinrichtungen DPAK durchgeschaltet. Die entsprechenden Verhältnisse sind in Figur 5 aufgezeigt.

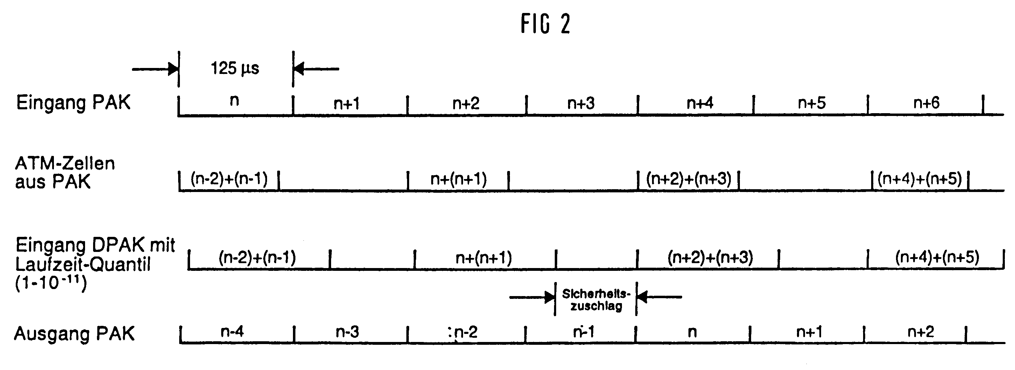

In Figur 2 ist eine Zeitbilanz für die Paketier-/Depaketiervorgänge aufgezeigt. Generell sind dabei folgende Parameter zu berücksichtigen:
- Die Paketierzeiten
- Die Zeit zum Aussenden einer ATM-Nachrichtenzelle aus der Paketiereinrichtung PAK
- (1 x 10⁻¹¹)-Quantil der Verzögerungszeit im ATM-Koppelfeld ASN
- zusätzliche Verzögerungen in anlagenindividuellen Puffern -
- sowie ein Sicherheitszuschlag.

Als einzige variierbaren Parameter sind lediglich die Paketierzeit und die Zeit zum Aussenden der ATM-Nachrichtenzelle Z aus der Paketiereinrichtung PAK durch Parallelscheiben von Multiplexleitungen zu erreichen. Aus dem Diagramm in Figur 4 ist weiterhin zu entnehmen, daß zum Erreichen des gesetzten Zieles lediglich zwei Oktetts pro Sprachkanal zusammengefaßt werden können, das heißt daß zum Füllen einer ATM-Nachrichtenzelle Z vierundzwanzig Sprachkanäle gebraucht werden. Um die ATM-Nachrichtenzellen Z möglichst gut auszulasten, müssen Paketiereinrichtungen PAK sowie Depaketiereinrichtungen DPAK so groß gemacht werden, daß bei Gleichverteilung des Verkehrs mehrere ATM-Nachrichtenzellen Z Pro Richtungsbündel gefüllt werden können. Damit wird gewährleistet, daß nur ein Bruchteil der ATM-Nachrichtenzellen Z lediglich teilbestückt ist (maximal eine pro Richtung). Dies führt dann zu den bereits angesprochenen großen Paketiereinrichtungen/Depaketiereinrichtungen DPAK, die zum Verkürzen der Sendezeit über mehrere im Loadsharing arbeitende Multiplexleitungen bzw. über eine mit entsprechend hoher Transport-Bitrate mit dem ATM-Koppelfeld ASN verbunden werden.

Weiterhin ist aus dem Diagramm nach Figur 2 zu entnehmen, daß unter den gegebenen Voraussetzungen eine maximale Laufzeit von 6 x 125 µs vorkommt (der Laufzeitausgleich für den Eingang ist nicht dargestellt) und sich ein Mittelwert von 5 x 125 µs ergibt. Damit wird der angestrebte 'Round-Trip-Delay' eingehalten. Solange diese ATM-Nachrichtenzellen Z innerhalb der ATM-Insel bleiben, ist weder eine nationale noch eine internationale Standardisierung erforderlich.

Ein weiterer Vorschlag der Laufzeitsenkung besteht darin, den Informationsteil INFO der Nachrichtenzellen Z von den heute standardisierten achtundvierzug Oktetts auch beispsielsweise auf nur vier oder acht Oktetts zu kürzen und diese 'kurzen' Nachrichtenzellen Z zusammen mit den herkömmlichen Nachrichtenzellen Z im ATM-Knoten durchzuschalten und weiterzuleiten.

Im Zusammenhang mit der Paketierung von Sprachkanälen besteht auch das Erfordernis, n x 64 kBit/s Kanäle im ATM-Kommunikationsnetz zu übertragen (2 < n < 32). Dies bedeutet, daß PCM-Primärsysteme (1544 bzw. 2048 kBit/s) ebenfalls in ATM-Nachrichtenzellen Z paketiert werden sollen. Im Rahmen der zeitgemäßen Zeitanforderungen für Sprachkanäle können diese breitbandigen Kanäle jeweils wie n Einzelkanäle behandelt werden. Das vorgeschlagene Verfahren garantiert, daß zusammengehörende Oktetts auch dann zusammenbleiben, selbst wenn die Teilkanäle in verschiedene ATM-Nachrichtenzellen Z paketiert werden. Für Forderungen nach wesentlich kürzeren Verzögerungszeiten für Primärsysteme könnte man entweder die Informationen eines 125 µs-Rahmens jeweils in einer ATM-Nachrichtenzelle Z paketieren, was einer Paketierzeit von 125 µs entspricht. Alternativ könnten die ATM-Nachrichtenzhellen jeweils mit der Folge von achtundvierzig Oktetts gefüllt werden, was einer Paketierzeit bei 1544/2048 kBit/s-Systemen von 250/187,5 µs entspricht. Unter Berücksichtigung der maximalen Laufzeit durch das ATM-Koppelnetz und eines Sicherheitszuschlags ergibt sich im ersten Fall eine Gesamtverzögerung von rund 250 µs. Im zweiten Fall erhöhen sich diese Werte entsprechend den verlängerten Paketierzeiten. Eine weitere Verkürzung der Verzögerungszeiten läßt sich dadurch erreichen, daß jeweils mehrere Kanäle, die zu einem Richtungsbündel gehören, wieder in ATM-Nachrichtenzellen Z zusammengefaßt und dadurch die Paketierzeit entsprechend verkleinert wird.

## Patentansprüche

1. Verfahren zum Übertragen von in einer Mehrzahl von Übertragungskanälen, die jeweils für eine einheitlich festgelegte Übertragungsbitrate ausgelegt sind, auftretenden Digitalsignalen über ein nach einem asynchronen Transfermodus arbeitendes ATM-Kommunikationsnetz mit wenigstens einer ATM-Kommunikationseinrichtung, in welchem Digitalsignale in Nachrichtenzellen (Z) übertragen werden, die jeweils über einen Zellenkopf (HEAD) und einen Informationsteil (INFO) verfügen, wobei der Informationsteil (INFO) aus einer festgelegten Anzahl von Feldern mit jeweils einer festgelegten Anzahl von Bitstellen gebildet ist,
**dadurch gekennzeichnet,**
daß die Übertragungskanäle zu wenigstens einer Übertragungskanal-Gruppe zusammengefaßt werden,
daß die Anzahl der zu der jeweiligen Übertragungskanal-Gruppe gehörenden Übertragungskanäle derart festgelegt ist, daß jedem dieser Übertragungskanäle in den Informationsteilen (INFO) aufeinanderfolgender Nachrichtenzellen (Z) jeweils wenigstens zwei Felder zugeordnet werden, in welche aufeinanderfolgende Bits der in dem jeweiligen Übertragungskanal auftretenden Digitalsignale eingetragen werden, und
daß die aufeinanderfolgenden Nachrichtenzellen (Z) nach einer Übertragung innerhalb des ATM-Kommunikationsnetzes nach Maßgabe der Zuordnung der Felder der Informationsteile INFO) dieser Nachrichtenzellen (Z) zu den Übertragungskanälen der jeweiligen Übertragungskanal-Gruppe wieder aufgelöst werden.

2. Verfahren nach Anspruch 1,
**dadurch gekennzeichnet,**
daß die Übertragungskanäle PCM-Kanäle für die Übertragung von PCM-codierten Sprachsignalen sind.

3. Verfahren nach Anspruch 1 oder 2,
**dadurch gekennzeichnet,**
daß an ein Koppelfeld (ASN) der wenigstens einen ATM-Kommunikationseinrichtung wenigstens ein Serversystem (S) angeschlossen ist, in welchem der Kopfteil (HEAD) der paketierten Nachrichtenzellen (Z) entnommen und ausgewertet wird und nach Maßgabe der dort enthaltenen Informationen die Nachrichtenzellen (Z) zu den entsprechenden Depaketiereinrichtungen (DPAK) weitergeleitet werden.

4. Verfahren nach einem der vorstehenden Ansprüche,
**dadurch gekennzeichnet,**
daß anstelle der im Informationsteil (INFO) einer Nachrichtenzelle (Z) fest definierten Vielzahl von Feldern eine variable Vielzahl verwendet wird.

5. Verfahren nach einem der vorstehenden Ansprüche,
**dadurch gekennzeichnet,**
daß n x 64kBit/s-Übertragungskanäle entsprechend der nach den Ansprüchen 1 bis 4 beschriebenen Vorgehensweise in Übertragungskanal-Gruppen zusammengefaßt und in entsprechender Weise wieder aufgelöst werden.

6. Anordnung zur Durchführung des Verfahrens zum Übertragen von in einer Mehrzahl von Übertragungskanälen, die jeweils für eine einheitlich festgelegte Übertragungsbitrate ausgelegt sind, auftretenden Digitalsignalen über ein nach einem asynchronen Transfermodus arbeitendes ATM-Kommunikationsnetz mit wenigstens einer ATM-Kommunikationseinrichtung, in welchem Digitalsignale in Nachrichtenzellen (Z) übertragen werden, die jeweils über einen Zellenkopf (HEAD) und einen Informationsteil (INFO) verfügen, wobei der Informationsteil (INFO) aus einer festgelegten Anzahl von Feldern mit jeweils einer festgelegten Anzahl von Bitstellen gebildet ist,
**dadurch gekennzeichnet,**
daß die wenigstens eine ATM-Kommunikationseinrichtung Paketiereinrichtungen (PAK) bzw. Depaketiereinrichtungen (DPAU) aufweist, wobei in den Paketiereinrichtungen (PAK) die Übertragungskanäle zu wenigstens einer Übertragungskanal-Gruppe zusammengefaßt werden, wobei die Anzahl der zu der jeweiligen Übertragungskanal-Gruppe gehörenden Übertragungskanäle derart Informationsteilen (INFO) aufeinanderfolgender Nachrichtenzellen (Z) jeweils wenigstens zwei Felder zugeordnet werden, in welche aufeinanderfolgende Bits der in dem jeweiligen Übertragungskanal auftretenden Digitalsignale eingetragen werden, und daß die aufeinanderfolgenden Nachrichtenzellen (Z) durch das ATM-Kommunikationsnetz zu Depaketiereinrichtungen (DPAK) übertragen werden, und
daß in den Depaketiereinrichtungen (DPAK) die paketierten Übertragungskanäle in die zugeordneten Übertragungskanal-Gruppen wieder aufgelöst wird.
